# EUROPEAN PATENT SPECIFICATION

(11) **EP 0 692 528 B1**
(45) Date of publication and mention of the grant of the patent: **08.12.1999**
(21) Application number: 95304788.3
(22) Date of filing: 10.07.1995
(51) Int. Cl.: C09D 11/00

(54) **Fluorescent pigmented ink composition having use in a bubble jet ink jet printer**
Fluoreszierende, pigmentierte Tintezusammensetzung für Tintenstrahldrucker mit Bläschen
Composition d'encre fluorescente pigmentée utilisable dans une imprimante à jet de bulles

(30) Priority: 11.07.1994 US 272481
(43) Date of publication of application: 17.01.1996
(73) Proprietor: PITNEY BOWES, INC., Stamford Connecticut 06926-0700 (US)
(72) Inventor: Auslander, Judith D., Westport, Connecticut 06880 (US)
(74) Representative: Avery, Stephen John

(56) References cited:
- US-A- 4 153 593
- US-A- 4 664 708
- US-A- 5 215 679
- US-A- 5 256 193

## Description

Throughout the history of printing technology, when a printer is developed that operates on a principle involving new technology, inks must be provided that are compatible for the new printing technology. A good example of the need to develop inks as print technology advances is in the area of non-impact printers, particularly ink jet printers.

Although a number of inks have been formulated that can be used satisfactorily with ink jet printers, not all such inks necessarily work well in all types of ink jet printers. For example, ink jet printers that use bubble jet technology have recently become commercially available and have the advantages of low cost and ease of maintenance. Bubble jet printers operate on a principle of heating ink in a chamber so as to force drive ink drops through a nozzle. Reference can be had to U.S. Patent No. 4,849,774 for a full description of a bubble jet printer. Although there are inks provided for such bubble jet printers, there is a need for a fluorescent ink that can be used in bubble jet printer that provides improved print quality, especially on irregular and porous surfaces, rapid drying time and improved water fastness of the resulting images. In addition, it would be advantageous to have inks that have the property of fluorescence with improved light fastness and sufficiently high emission so as to be readily detectable.

### Summary of the Invention

An aqueous based fluorescent ink composition has been formulated that is especially suited for ink jet printers based on bubble jet technology. The ink compositions contain pigments obtained by emulsion polymerization of sub-micron size latex particles dispersed in water. These pigments improve water fastness. The composition also includes humectants for viscosity and penetration control, preferably from 0.002 to 0.015 Pa.s (2 - 15 cps), and surface tension lowering surfactants that prevent the pigments from interacting and settling in the print head.

The present invention provides anink composition for ink jet printers that operate on the bubble jet principle, the composition comprising
a) 10 to 50% by weight of an aqueous emulsion of emulsion polymerized latex based pigments having 0.2 to 1.4% by weight of fluorescent dye based upon the total weight of the ink composition,
b) 10 to 15% by weight of an humectant,
c) 3-9% by weight of a surfactant or a dispersion stabilising acrylate, and
d) the balance of water.

### Detailed Description of the Preferred Embodiment

The ink compositions of the instant invention are based on an aqueous emulsion obtained by emulsion polymerization of latex based pigments and fluorescent dyes in a water insoluble tetrapolymer, such as styrene acrylonitrile which is anionically stabilized. The preferred particle size of the pigment is between 0.2 and 0.8 µm. Traditional fluorescent pigments swell in traditional solvents and cannot be used in ink jet printers. The proposed latex based pigments have stable viscosity with aging because these pigments resist swelling and dissolution. Any of a number of fluorescent dyes can be used including C.I. Basic Red 1, Basic Violet 10, Solvent Yellow 43 and Solvent Yellow 44. The method of preparing the aqueous emulsion that is part of the ink composition of the instant invention can be found in U.S. Patent No. 5,215,679, Col. 4, lines 23-67, which is hereby incorporated by reference. Preferably the water insoluble tetrapolymer comprises 52 to 65% water insoluble vinyl monomer free of polar groups, 25 to 35% acrylonitrile, 1.5 to 4.5% vinyl monomer containing sulfonate groups,and 5.0 to 15% polar vinyl monomers selected from the group consisting of polar acrylate esters, vinyl acetate and substituted acrylamide containing OH or carboxylic ester groups.

The inks of the instant invention contain coalescing agents, or humectants, in order to improve film forming properties of the ink as well as to prevent drying at the nozzles of the printer. The preferred pH of the formulation is between 7 and 8. The acceptable pH value for the pigment dispersion stabilization is between 4 and 8. Surfactants, or acrylates, are used for dispersion stabilization.

Humectants that can be used in the ink formulation to control the viscosity and penetration control, preferably between 2 and 15 cps and can include formamide, dimethyl sulfoxide, dimethyl ethanolamines, N-methyl -2-pyrrolidone, diethylene glycol, propyleneglycol, glycerin, dipropylene glycol, amide ethers, carboxylic acids, organosulfoxide, cellosolves, ketones, lactones and the like. Preferably the humectant will include cyclic amides of the formula:

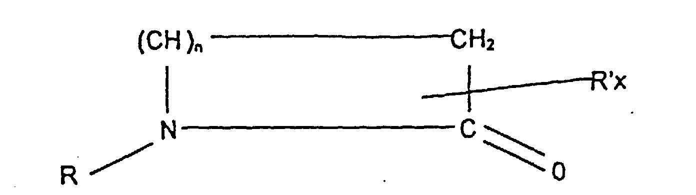

Where n is 2 to 12, R is hydrogen, alkyl or substituted alkyl with from 1 to 6 carbon atoms, a polyethoxy group or a polymeric group and R' represents one or more substituents that can replace hydrogen in any of the hydrocarbon positions in the molecule.

Surfactants that can be used in the instant invention can be of the cationic, anionic or nonionic types. Suitable commercially available surfactants include Igepal®(nonylphenoxy-polyoxyethyleneoxyethanol) available from GAF Company and Lomar D (a condensation of formaldehyde and sodium napthalene sulfonate) available from El duPont, de Nemours & Co.

Other suitable surfactants include aliphatic sulfates, aromatic sulfates, amine oxides, and alkenyl amides, such as Tamol (sodium lauryl sulfate) available from Rohm & Haas.

The aqueous emulsion is composed of a water insoluble tetrapolymer formed from 52 to 65% of a water insoluble vinyl monomer free of polar groups, 25 to 35% acrylonitrile, 1.5 to 4.5% of a vinyl monomer containing sulfonate groups and 5 to 15% of one or more polar vinyl monomers from the group consisting of polar acrylate esters, vinyl acetate and substituted acrylamide containing OH or carboxylic ester groups.

The overall composition, by weight, for the ink composition of the .instant invention is:
10 to 50% aqueous emulsion, (preferably 20 to 30%)
0.2 to 1.4% fluorescent dye,
3 to 9% surfactant or a dispersion stabilising acrylate,
10 to 15% humectant, and
balance water.

The inks formulated in accordance with the instant invention are stable up to 400° C with no decomposition products and the resulting prints have high resistance to water bleeding of the colorant. The print quality on non-porous substrates can be increased by adding 0.5 to 1% film formers such as xanthan gums or acrylic resins.

The fluorescent signal of the resulting prints is higher than with conventional pigments due to the small particle size and the fluorescence rigidization by the encapsulation of the tetra-polymer. The inks are non-newtonian with slight shear thinning at high shear rates. The preferred shape of the pigments is spherical, so as to better stabilize the dispersion.

In the following Examples and claims, all amounts are in weight percent.

### Example I

| Component | Source | Percent |
|---|---|---|
| Blaze Orange Emulsion Pigment | EPX | 20% |
| | Dayglo Corp. | |
| | | |
| Containing: | | |
| C.I. Basic Red 1 | | 0.4% |
| Solvent Yellow 160 | | 0.2% |
| Sierra Yellow | | 0.1% |
| N-methyl pyrrolidone (humectant) | | 15% |
| Laurel Sulphate (Anionic Surphactant) | Tomel | |
| | Rohm & Haas | 6.0% |
| | | |
| Water | | Balance |

The above composition was supplied to the sump of an Olivetti bubble jet printer Model No. JP 250 and was found to perform in an acceptable manner. The fluorescence that was exhibited was brilliant and the intensity of the resulting print was approximately 40 PMU on a draw down.

### Example II

| Component | Source | Percent |
|---|---|---|
| Red Rocket Emulsion Pigment | EPX | 30% |
| | Dayglo Corp. | |
| | | |
| Containing: | | |
| Basic Red I | | 0.4% |
| Basic Red II | | 0.3% |
| | | |
| Dimethyl Sulphoxide | Aldrich | 15% |
| | | |
| Nonyl Phenoxy | Igepal 430 | 1% |
| Polyoxythylene Ethanol | GAF Corp. | |
| | | |
| Water | | Balance |

These inks have been found to have particular utility in the field of mail processing. As is known in the art, fluorescent indicias are printed on mail pieces so that the fluorescence can be sensed to allow proper orientation of the mail pieces. With the inks of the instant invention, not only is the fluorescent signal higher than that achieved by prior inks, but the ability to print on porous surfaces yields better print quality on such surfaces, as for example low quality envelopes.

The above embodiments have been given by way of illustration only, and other embodiments of the instant invention will be apparent to those skilled in the art from consideration of the detailed description. Accordingly, the invention is not considered to be limited by the details of the particular examples herein, and the claims are to be interpreted according to EPC Article 69 and its Protocol.

## Claims

1. An ink composition for ink jet printers that operate on the bubble jet principal, the composition comprising
a) 10 to 50% by weight of an aqueous emulsion of emulsion polymerized latex based pigments having 0.2 to 1.4% by weight of fluorescent dye based upon the total weight of the ink composition,
b) 10 to 15% by weight of an humectant,
c) 3-9% by weight of a surfactant or a dispersion stabilising acrylate, and
d) the balance of water.

2. An ink composition according to Claim 1, further comprising 0.5 to 1% by weight of a film former.

3. An ink composition according to Claim 2, wherein the film former is a xanthan gum or an acrylic resin.

4. An ink composition according to any preceding Claim, wherein said aqueous emulsion is formed from a water insoluble tetrapolymer.

5. An ink composition according to Claim 4, wherein said water insoluble tetrapolymer comprises 52 to 65% by weight water insoluble vinyl monomer free of polar groups, 25 to 35% by weight acylonitrile, 1.5 to 4.5% by weight vinyl monomer containing sulfonate groups and 5.0 to 15% by weight polar vinyl monomers selected from the group consisting of polar acrylate esters, vinyl acetate and substituted acrylamide containing OH or carboxylic ester groups.

6. An ink composition according to any preceding Claim, wherein the composition comprises 20 to 30% by weight of the aqueous emulsion.

7. An ink composition according to any preceding Claim, wherein the particle size of said pigment is from 0.2 to 0.8 µm.

8. An ink composition according to any preceding Claim, wherein the viscosity of the composition is from 0.002 to 0.015 Pa.s (2-15 cps).

9. An ink composition according to any preceding Claim, which has a pH between 4 and 8.

## Patentansprüche

1. Tintenzusammensetzung für Tintenstrahldrucker, die nach dem Bubble-Jet-Prinzip arbeiten, wobei die Zusammensetzung
a) 10 bis 50 Gew.-% einer wäßrigen Emulsion emulsionspolymerisierter Pigmente auf Latexbasis, die 0,2 bis 1,4 Gew.-% Fluoreszenzfarbstoff, bezogen auf das Gesamtgewicht der Tintenzusammensetzung enthält;
b) 10 bis 15 Gew.-% eines Feuchthaltemittels;
c) 3 bis 9 Gew.-% eines oberflächenaktiven Mittels oder eines eine Dispersion stabilisierenden Acrylats; und
d) als Ausgleich Wasser umfaßt.

2. Tintenzusammensetzung nach Anspruch 1, die außerdem 0,5 bis 1 Gew.-% eines Filmbildners enthält.

3. Tintenzusammensetzung nach Anspruch 2, in der der Filmbildner ein Xanthangummi oder ein Acrylharz ist.

4. Tintenzusammensetzung nach einem der vorangehenden Ansprüche, in der die wäßrige Emulsion aus einem wasserunlöslichen Tetrapolymer gebildet ist.

5. Tintenzusammensetzung nach Anspruch 4, in der das wasserunlösliche Tetrapolymer 52 bis 65 Gew.-% wasserunlösliches Vinylmonomer, das frei von polaren Gruppen ist, 25 bis 35 Gew.-% Acrylnitril, 1,5 bis 4,5 Gew.-% Vinylmonomer, das Sulfonatgruppen hat, und 5,0 bis 15 Gew.-% polare Vinylmonomere, die aus der Gruppe bestehend aus polaren Acrylsäureestern, Vinylacetat und substituiertem Acrylamid, das OH- oder Carbonsäureestergruppen enthält, ausgewählt sind, umfaßt.

6. Tintenzusammensetzung nach einem der vorangehenden Ansprüche, in der die Zusammensetzung 20 bis 30 Gew.-% der wäßrigen Emulsion enthält.

7. Tintenzusammensetzung nach einem der vorangehenden Ansprüche, in der die Teilchengröße des Pigments zwischen 0,2 und 0,8 µm ist.

8. Tintenzusammensetzung nach einem der vorangehenden Ansprüche, in der die Viskosität der Zusammensetzung zwischen 0,002 und 0,015 Pa·s (2 - 15 cps) liegt.

9. Tintenzusammensetzung nach einem der vorangehenden Ansprüche, die einen pH zwischen 4 und 8 hat.

## Revendications

1. Composition d'encre pour imprimantes à jet d'encre qui fonctionnent sur le principe du jet à bulle, la composition comprenant :
a) 10 à 50 % en poids d'une émulsion aqueuse de pigments à base de latex polymérisés par émulsion ayant 0,2 à 1,4 % en poids de colorant fluorescent par rapport au poids total de la composition d'encre,
b) 10 à 15 % en poids d'un humectant,
c) 3 à 9% en poids d'un tensioactif ou d'un acrylate stabilisant la dispersion, et
d) le complément en eau.

2. Composition d'encre selon la revendication 1, comprenant en outre 0,5 à 1 % en poids d'un agent de formation de film.

3. Composition d'encre selon la revendication 2, dans laquelle l'agent filmogène est une gomme de xanthane ou une résine acrylique.

4. Composition d'encre selon l'une quelconque des revendications, dans laquelle l'émulsion aqueuse est formée à partir d'un tétrapolymère insoluble dans l'eau.

5. Composition d'encre selon la revendication 4, dans laquelle ledit tétrapolymère insoluble dans l'eau comprend 52 à 65 % en poids de monomère vinylique insoluble dans l'eau exempt de groupes polaires, 25 à 35 % en poids d'acrylonitrile, 1,5 à 4,5 % en poids de monomère vinylique contenant des groupes sulfonate et 5,0 à 15 % en poids de monomères vinyliques polaires choisis dans le groupe formé par les esters d'acrylate polaire, l'acétate de vinyle et l'acrylamide substitué contenant des groupes OH ou ester carboxylique.

6. Composition d'encre selon l'une quelconque des revendications précédentes, dans laquelle la composition comprend 20 à 30 % en poids de l'émulsion aqueuse.

7. Composition d'encre selon l'une quelconque des revendications précédentes, dans laquelle la taille de particule dudit pigment est de 0,2 à 0,8 µm.

8. Composition d'encre selon l'une quelconque des revendications précédentes, dans laquelle la viscosité de la composition est comprise entre 0,002 et 0,015 Pa.s (2 à 15 cps).

9. Composition d'encre selon l'une quelconque des revendications précédentes, qui possède un pH compris entre 4 et 8.
